# EUROPEAN PATENT SPECIFICATION

(11) **EP 1 910 076 B1**
(45) Date of publication and mention of the grant of the patent: **05.10.2016**
(21) Application number: 06786087.4
(22) Date of filing: 29.06.2006
(51) Int. Cl.: B32B 17/10, B32B 27/08, B32B 27/36, B32B 27/30, B32B 27/40, C08J 5/18, C08L 67/02, C08G 63/199

(54) **POLYMER INTERLAYERS COMPRISING POLY(CYCLOHEXANEDIMETHYLENE TEREPHTHALATE-CO-ETHYLENE TEREPHTHALATE) COPOLYESTER**
POLYMERZWISCHENSCHICHTEN ENTHALTEND POLY(CYCLOHEXANDIMETHYLEN-CO-ETHYLEN-TEREPHTHALAT) COPOLYESTER
INTERCOUCHES POLYMERES COMPRENANT POLY(CYCLOHEXANEDIMETHYLENE TEREPHTHALATE-CO-ETHYLENE TEREPHTHALATE) COPOLYESTER

(30) Priority: 30.06.2005 US 170643; 30.06.2005 US 170445
(43) Date of publication of application: 16.04.2008
(73) Proprietor: Solutia Inc., St. Louis, Missouri 63141 (US)
(72) Inventor: CHEN, Wenjie, Amherst, MA 01002 (US); SZYDLOWSKI, Witold, Wilbraham, MA 01095 (US); KARAGIANNIS, Aristotelis, Amherst, MA 01002 (US)
(74) Representative: Beckmann, Claus
(86) International application number: PCT/US2006/025771
(87) International publication number: WO 2007/005711

(56) References cited:
- EP-A2- 0 918 064
- WO-A-97/22474
- US-A- 4 911 984
- US-A- 5 427 842
- US-A1- 2004 247 879
- US-B1- 6 797 396

## Description

### FIELD OF THE INVENTION

The present invention is in the field of polymer interlayers used in multiple layer glass panels having one or more glass layers, and specifically the present invention is in the field of polymer interlayers comprising a layer of poly(cyclohexanedimethylene terephthalate-co-ethylene terephthalate) copolyester (PETG).

### BACKGROUND

Polymer sheets that can be used as interlayers in light-transmitting, multiple layer laminates, such as safety glass or polymeric laminates, typically comprise poly(vinyl butyral). Safety glass generally refers to a transparent laminate comprising a poly(vinyl butyral) sheet disposed between two panes of glass. Safety glass often is used to provide a transparent or decorative barrier in architectural and automotive openings. Its main function is to absorb energy, such as that caused by a blow from an object, without allowing penetration through the opening.

Although poly(vinyl butyral) is well suited in general for use as a polymer sheet in safety glass interlayers, alternative materials are often useful as well. For example, poly(ethylene-co-vinyl acetate) (EVA) and polyurethane have both been used as interlayers in glazing laminates. Interlayer materials are chosen for, among other reasons, improved handling, reduced cost of production, and improved performance. Alternatives to poly(vinyl butyral) interlayers could be useful, for example, if those alternatives showed improved performance below 0°C and/or above 35°C, where standard poly(vinyl butyral) has relatively poor impact performance. Furthermore, alternatives which could provide much higher penetration resistance and stiffness to the laminated glass will be desired as well in applications requiring high security, bullet-proofing, hurricane-proofing, glazing, and so on.

Accordingly, further improved materials for use as an interlayer or part of an interlayer in multiple layer glass panels are needed in the art.

WO 97/22474 describes a synthetic laminate structure and a method for making the synthetic laminate structure. More particularly, the synthetic laminate structure contains an outer layer comprising a substantially transparent copolyester, a printed or colored film layer having opposed surfaces wherein at least one of the surfaces is colored or has an image printed thereon, a backing layer, and a laminating enhancer layer comprising a polyurethane disposed between the outer layer and the film layer, the laminated enhancer layer providing a bond between the outer layer and film layer characterized by a substantial absence of visible air pockets or adhesion discontinuities. More specifically, the synthetic laminate structure comprises: (A) an outer layer comprising a substantially transparent copolyester having an inherent viscosity of from about 0.5 to about 1.2 dL/g; (B) a printed or colored film layer having opposed surfaces wherein at least one of the surfaces is colored or has an image printed thereon; (C) a backing layer disposed adjacent the film layer comprising a polymer selected from the group consisting of polyvinyl chloride and a copolyester; and (D) a laminating enhancer layer comprising a polyurethane disposed between the outer layer and the film layer providing a bond between the layers which is characterized by a substantial absence of visible air pockets or adhesion discontinuities. In a preferred embodiment the diol component of the copolyester comprises repeat units from 67 to 75 mole % of ethylene glycol and 33 to 25 mole of 1,4-cyclohexanedimethanol.

US 4,911,984 describes a laminated glazing unit composed of an improved polymer interlayer composite interposed between two glass sheets and its method of manufacture. The improved interlayer contains various layers with appropriate thicknesses of silane primer, poly(ethylene vinyl acetate) and poly(ethylene terephthalate) arranged and bonded together in a particular fashion to increase the fragment retention capabilities of the laminated glazing while also improving the overall penetration resistance and safety characteristics of the structure without increasing the rigidity to a point where it poses a safety threat to the occupant. In one example 9 (paragraph [0126]), a copolymerized polyester (Easter PETG6763 manufactured by Eastman Chemical Company) in which terephthalic acid as the dicarboxylic acid component, and 30 mol % 1,4-cyclohexane dimethanol and 70 mol % ethylene glycol as the diol component were copolymerized, was employed as the thermoplastic resin.

US 2004/247,879 describes a glass protecting film comprising at least 5 or more layers, of which at least one layer is a layer which comprises polyester having 1,4-cyclohexane dimethanol as one of the components, and a glass protecting comprising a multi-layer structure which comprises at least two kinds of thermoplastic resin, of which the difference of glass transition temperature is 40 °C or less, the face-impact strength is 18 J/mm or more, haze is 3% or less. The film is said to be excellent in transparency, tear resistance, and impact resistance, and suitable for protecting glass and preventing damaged glass fragments.

EP 0 918 064 A2 describes a transparent thick copolyester sheet having a light transmittance of at least 82% and a haze of at most 5%, the copolyester being composed of (A) an acid component comprising (i) a terephthalate moiety as major component, (ii) a 2,6-naphthalene dicarboxylate moiety, and (iii) optionally, an isophthalate moiety, and (B) a glycol component comprising (i) ethylene glycol, and (ii) optionally, 1,4-cyclohexane dimethanol. Such a transparent thick copolyester sheet is said to be suitable for various industrial usages such as glass substitute of automobile, window glass substitute of high building, and transparent soundproof wall.

US 6,797,396 describes a birefringent dielectric multilayer film that reflects in a wavelength region of interest, and preferably reflects at least 50% of light in a band at least 100 nm wide, preferably positioned between wavelengths from about 700 nm to about 2000 nm. The film is heat set to render the film capable of shrinking to conform without substantial wrinkling to a substrate having a compound curvature. The film may be laminated to form a wide variety of non-planar articles.

### SUMMARY OF THE INVENTION

It has now been surprisingly discovered, according to the present invention, that interlayers comprising poly(cyclohexanedimethylene terephthalate-co-ethylene terephthalate) copolyester can be used to form interlayers having, relative to conventional interlayers, improved impact performance over a broader range of conditions. Further, poly(cyclohexanedimethylene terephthalate-co-ethylene terephthalate) interlayers of the present invention can be formed into thin interlayers having equivalent impact resistance to thicker, conventional interlayers.

Thus, the invention provides the laminated glass interlayer defined in claims 1 and 8 as well as the multiple layer glass panel defined in claims 12 and 18.

### BRIEF DESCRIPTION OF THE DRAWINGS

Figure 1 represents a schematic cross sectional view of one embodiment of an interlayer of the present invention.
Figure 2 represents a schematic cross sectional view of one embodiment of a bilayer of the present invention.

### DETAILED DESCRIPTION

The present invention is directed to interlayers that can be used in multiple layer laminated glass constructs such as those used in architectural applications and automotive, train, and aircraft applications. Interlayers of the present invention incorporate one or more layers of poly(cyclohexanedimethylene terephthalate-co-ethylene terephthalate) copolyester, which, when extruded or otherwise formed into a sheet, forms an amorphous polymer layer that does not need to be biaxially stretched like poly(ethylene terephthalate) to achieve clarity, and which can be formed into a much thicker layer than poly(ethylene terephthalate) without a consequent reduction in clarity.

As used herein, poly(cyclohexanedimethylene terephthalate-co-ethylene terephthalate), or "PETG", refers to poly(1,4-cyclohexanedimethylene terephthalate-co-ethylene terephthalate) copolyester.

As is known in the art, the reaction of ethylene glycol with terephthalic acid results in poly(ethylene terephthalate). Addition of cyclohexanedimethanol, shown below, to the reaction results in poly(cyclohexanedimethylene terephthalate-co-ethylene terephthalate) copolyester. The poly(cyclohexanedimethylene terephthalate-co-ethylene terephthalate) resins are available commercially in various forms from, for example, Eastman Chemical Company (Kingsport, Tennessee) as Spectar™ or Eastar™ resin and SK Chemicals (South Korea) as SKYGREEN^{®} resin.

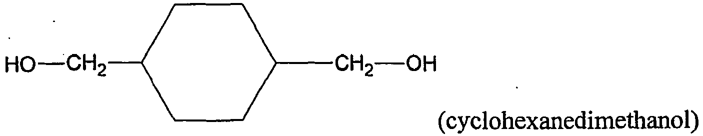

Poly(cyclohexanedimethylene terephthalate-co-ethylene terephthalate) copolyester compositions of the present invention comprise, on a weight per weight basis, at least 10% of the following poly(ethylene terephthalate) component:

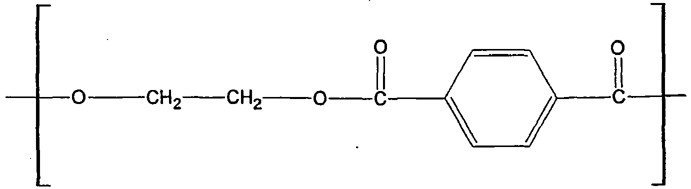

With the remainder being all, or substantially all of the following poly(1,4 cyclohexanedimethylene terephthalate) component:

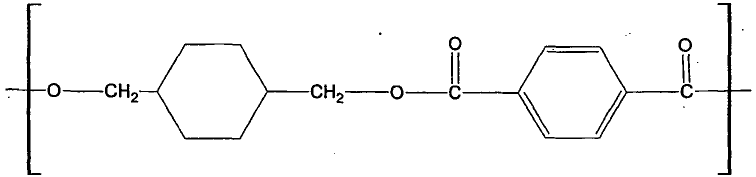

In various embodiments of the present invention, a polymer sheet comprising poly(cyclohexanedimethylene terephthalate-co-ethylene terephthalate) copolyester comprises at least 10%, 20%, 30%, 40%, 50%, 60%, 70%, 80%, or 90% of the poly(ethylene terephthalate) component, with an upper maximum of no more than 90%, 95%, and, in some embodiments, no more than 99% of the poly(ethylene terephthalate) component.

In various embodiments of the present invention, a polymer sheet comprising poly(cyclohexanedimethylene terephthalate-co-ethylene terephthalate) copolyester can comprise as an optional component isomers of terephthalic acid, such as isophthalic acid, which can be added to the reaction mixture.

In one embodiment of the present invention, the interlayer consists essentially of a polymer sheet comprising poly(cyclohexanedimethylene terephthalate-co-ethylene terephthalate) copolyester and adhesion promoters. In various embodiments, the poly(cyclohexanedimethylene terephthalate-co-ethylene terephthalate) copolyester polymer sheet has a thickness of at least 0.02 millimeters, 0.035, millimeters, 0.05 millimeters, 0.1 millimeters, 0.2 millimeters, 0.5 millimeters, 1.0 millimeters, 5.0 millimeters, 10 millimeters, 15 millimeters, or at least 20 millimeters. In these embodiments, adhesion promoters can be included in or sprayed on the poly(cyclohexanedimethylene terephthalate-co-ethylene terephthalate) polymer sheet to promote adhesion to glass. The multiple layer structure consists essentially of the poly(cyclohexanedimethylene terephthalate-co-ethylene terephthalate) interlayer disposed between two layers of glass.

Adhesion promoters that are useful with poly(cyclohexanedimethylene terephthalate-co-ethylene terephthalate) interlayers of the present invention include silane coupling agents, such as, γ-glycidoxypropyltrimethoxysilane, γ-aminopropyltriethoxysilane, β-cyclohexylethyltrimethoxysilane, N-β-aminoethylaminomethylphenylethyltrimethoxysilane, N-β-aminoethyl-γ-aminopropyltrimethoxysilane, bis(β-hydroxyethyl)-γ-aminopropyltriethoxysilane, and the like; acrylic adhesives; cyanoacrylates cement; polyurethanes adhesives; polyester adhesives; and the like.

In various embodiments of the present invention, an interlayer comprises a polymer sheet comprising poly(cyclohexanedimethylene terephthalate-co-ethylene terephthalate) copolyester, wherein the polymer sheet comprising poly(cyclohexanedimethylene terephthalate-co-ethylene terephthalate) copolyester has a thickness of at least 0.25 millimeters, 0.3 millimeters, 0.5 millimeters, 1.0 millimeters, 5.0 millimeters, 10 millimeters, 15 millimeters, or at least 20 millimeters.

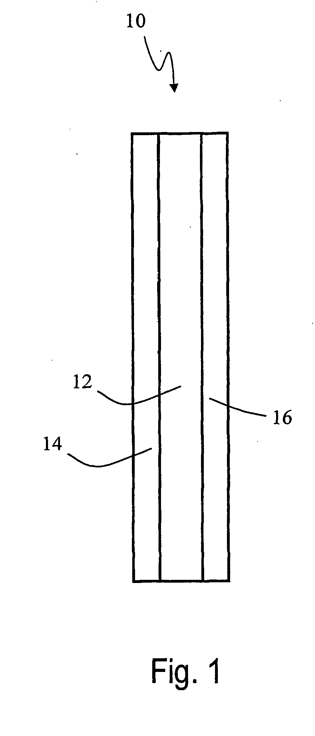

In various embodiments of interlayers of the present invention comprising a polymer sheet comprising poly(cyclohexanedimethylene terephthalate-co-ethylene terephthalate), the polymer sheet comprising poly(cyclohexanedimethylene terephthalate-co-ethylene terephthalate) is incorporated into the interlayer between two layers of other polymeric material, resulting in a multiple layer interlayer as defined in claim 1. As shown in Figure 1 generally at 10, interlayers of these embodiments comprise a poly(cyclohexanedimethylene terephthalate-co-ethylene terephthalate) first polymer sheet 12 disposed between a second polymer sheet 14 and a third polymer sheet 16. As will be described in detail below, the second polymer sheet 14 and third polymer sheet 16 can comprise a suitable polymer selected from poly(vinyl butyral), poly(vinyl chloride), poly(ethylene-co-vinyl acetate), poly(ethylene-co-ethyl acrylate), ionomers of partially neutralized ethylene/(meth)acrylic acid copolymer (such as Surlyn^{®} from DuPont), polyethylene, polyethylene copolymers and polyurethane.

The second polymer sheet 14 and the third polymer sheet 16 can comprise the same polymer sheet material or different materials, and can have the same thickness or different thicknesses. Overall thickness of three layer embodiments can be, for example, from 0.27 millimeters and thicker, where the second polymer sheet and third polymer sheet are at least 0.01 millimeters thick.

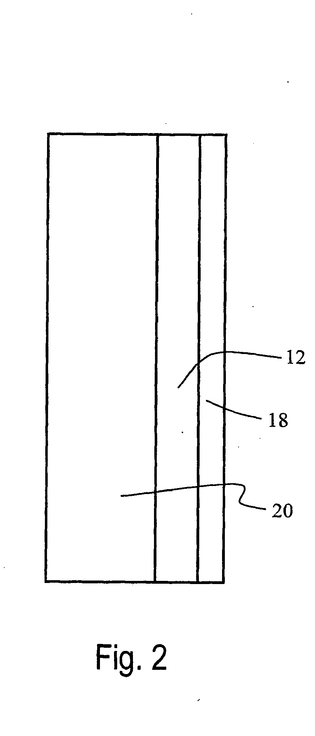

In further embodiments, as shown in Figure 2, which is known as a bilayer, a poly(cyclohexanedimethylene terephthalate-co-ethylene terephthalate) first polymer sheet 12 is disposed between a second polymer sheet 18 and a rigid substrate 20, which can be glass or another rigid glazing substrate, such as plastic having a high glass transition temperature. In these bilayer embodiments, the poly(cyclohexanedimethylene terephthalate-co-ethylene terephthalate) first polymer sheet and the second polymer sheet can have any of the compositions and characteristics given above for the corresponding layers shown in Figure 1. Additionally, the poly(cyclohexanedimethylene terephthalate-co-ethylene terephthalate) first polymer sheet 12 can optionally include any of the adhesion promoters given elsewhere herein. As used herein, an "interlayer" includes the one or more layers that form the polymeric component of bilayers - for example, layers 12 and 18 in Figure 2.

In alternative embodiments, the poly(cyclohexanedimethylene terephthalate-co-ethylene terephthalate) copolyester first polymer sheet 12 and second polymer sheet 18 can be reversed to produce a bilayer having the construct: rigid substrate//polymer sheet//PETG polymer sheet. In these embodiments, the poly(cyclohexanedimethylene terephthalate-co-ethylene terephthalate) copolyester polymer sheet can have a thickness of at least of at least 0.25 millimeters, 0.3 millimeters, 0.5 millimeters, 1.0 millimeters, 5.0 millimeters, 10 millimeters, 15 millimeters, or at least 20 millimeters.

Overall thickness of bilayer embodiments can be, for example, from 0.26 millimeters and thicker.

In addition to the layers described above and shown in the Figures 1 and 2, additional layers can also be incorporated, as are known in the art. For example, a performance enhancing polymer film layer comprising poly(ethylene terephthalate) can be included, where appropriate. Further polymer sheet layers can also be included. One exemplary interlayer embodiment has the following structure: polymer sheet//polymer film//polymer sheet//PETG polymer sheet//polymer sheet. Other variations are, of course, possible and within the scope of the present invention.

The embodiments described above and shown in Figures 1 and 2 include interlayers that are formed by laminating multiple individual polymer layers together into a single, multiple layer interlayer, as well as other methods of producing interlayers within the scope of the present invention, such as coextrusion and extrusion coating. Either of these extrusion methods can be used to produce a multiple layer interlayer comprising polymer sheets or polymer films.

Various embodiments of the present invention include multiple poly(cyclohexanedimethylene terephthalate-co-ethylene terephthalate) polymer sheets.

### POLYMER SHEET

As used herein, a "polymer sheet" means any thermoplastic polymer composition formed by any suitable method into a thin layer for use in combination with a layer of poly(cyclohexanedimethylene terephthalate-co-ethylene terephthalate) to form an interlayer that provides adequate penetration and glass retention properties to laminated glazing panels. The polymer sheet could be preformed into the sheet and then laminated with poly(cyclohexanedimethylene terephthalate-co-ethylene terephthalate) to form an interlayer comprising poly(cyclohexanedimethylene terephthalate-co-ethylene terephthalate).

Plasticized poly(vinyl butyral) is most commonly used to form polymer sheets. As described in this section, "polymer sheets" specifically do not include poly(cyclohexanedimethylene terephthalate-co-ethylene terephthalate) polymer sheets, which are described above.

The following section describes the various materials that can be used to form polymer sheets of the present invention, for example those sheets shown as elements 14 and 16 in Figure 1.

In various embodiments of the present invention, polymer sheets can be between 0.01 and 4.0 millimeters, 0.1 to 2.0 millimeters, 0.25 to 1.0 millimeters, or 0.3 to 0.7 millimeters in thickness. In other applications, thickness can be about 1 to 2 centimeters or thicker. In certain security applications, thickness can significantly increase, and multiple layers of thin polymer sheets, for example 30,40, or 50 polymer sheets, can be laminated together to form a single very thick layer.

The polymer sheets that may be present in the laminated glass interlayer or the multiple layer glass panel according to certain embodiments of the present invention can comprise any suitable polymer, and, in a one embodiment, as exemplified above, the polymer sheet comprises poly(vinyl butyral). In any of the embodiments of the present invention given herein that comprise poly(vinyl butyral) as the polymeric component of the polymer sheet, another embodiment is included in which the polymer component consists of or consists essentially of poly(vinyl butyral). In these embodiments, any of the variations in additives, including plasticizers, disclosed herein can be used with the polymer sheet having a polymer consisting of or consisting essentially of poly(vinyl butyral).

In one embodiment, the polymer sheet comprises a polymer based on partially acetalized poly(vinyl alcohol)s. In further embodiments the polymer sheet comprises poly(vinyl butyral) and one or more other polymers. In any of the sections herein in which preferred ranges, values, and/or methods are given specifically for poly(vinyl butyral) (for example, and without limitation, for plasticizers, component percentages, thicknesses, and characteristic-enhancing additives), those ranges also apply, where applicable, to the other polymers and polymer blends disclosed herein as useful as components in polymer sheets.

For embodiments comprising poly(vinyl butyral), the poly(vinyl butyral) can be produced by any suitable method. Details of suitable processes for making poly(vinyl butyral) are known to those skilled in the art (see, for example, U.S. Patents 2,282,057 and 2,282,026). In one embodiment, the solvent method described in Vinyl Acetal Polymers, in Encyclopedia of Polymer Science & Technology, 3rd edition, Volume 8, pages 381-399, by B.E. Wade (2003) can be used. In another embodiment, the aqueous method described therein can be used. Poly(vinyl butyral) is commercially available in various forms from, for example, Solutia Inc., St. Louis, Missouri as Butvar™ resin.)

In various embodiments, the resin used to form polymer sheet comprising poly(vinyl butyral) comprises 10 to 35 weight percent (wt. %) hydroxyl groups calculated as poly(vinyl alcohol), 13 to 30 wt. % hydroxyl groups calculated as poly(vinyl alcohol), or 15 to 22 wt. % hydroxyl groups calculated as poly(vinyl alcohol). The resin can also comprise less than 15 wt. % residual ester groups, 13 wt. %, 11 wt. %, 9 wt. %, 7 wt. %, 5 wt. %, or less than 3 wt. % residual ester groups calculated as polyvinyl acetate, with the balance being an acetal, preferably butyraldehyde acetal, but optionally including other acetal groups in a minor amount, e.g., a 2-ethyl hexanal group (see, for example, U.S. Patent 5,137,954).

In various embodiments, the polymer sheet comprises poly(vinyl butyral) having a molecular weight at least 30,000, 40,000, 50,000, 55,000, 60,000, 65,000, 70,000, 120,000, 250,000, or at least 350,000 grams per mole (g/mole or Daltons). Small quantities of a dialdehyde or trialdehyde can also be added during the acetalization step to increase molecular weight to at least 350 g/m (see, for example, U.S. Patents 4,902,464; 4,874,814; 4,814,529; 4,654,179). As used herein, the term "molecular weight" means the weight average molecular weight.

Various adhesion control agents can be used in polymer sheets of the present invention, including sodium acetate, potassium acetate, and magnesium salts. Magnesium salts that can be used with these embodiments of the present invention include, but are not limited to, those disclosed in U.S. Patent 5,728,472, such as magnesium salicylate, magnesium nicotinate, magnesium di-(2-aminobenzoate), magnesium di-(3-hydroxy-2-napthoate), and magnesium bis(2-ethyl butyrate) (chemical abstracts number 79992-76-0). In various embodiments of the present invention the magnesium salt is magnesium bis(2-ethyl butyrate).

Additives may be incorporated into the polymer sheet to enhance its performance in a final product. Such additives include, but are not limited to, the following agents: antiblocking agents, plasticizers, dyes, pigments, stabilizers (e.g., ultraviolet stabilizers), antioxidants, flame retardants, IR absorbers, and combinations of the foregoing additives, and the like, as are known in the art.

In various embodiments of polymer sheets, the polymer sheets can comprise 5 to 60, 25 to 60, 5 to 80, or 10 to 70 parts plasticizer per one hundred parts of resin (phr). Of course other quantities can be used as is appropriate for the particular application. In some embodiments, the plasticizer has a hydrocarbon segment of fewer than 20, fewer than 15, fewer than 12, or fewer than 10 carbon atoms.

The amount of plasticizer can be adjusted to affect the glass transition temperature (Tg) of the poly(vinyl butyral) sheet In general, higher amounts of plasticizer are added to decrease the Tg. Poly(vinyl butyral) polymer sheets of the present invention can have a Tg of, for example, 40°C or less, 35°C or less, 30°C or less, 25°C or less, 20°C or less, and 15°C or less.

Any suitable plasticizers can be added to the polymer resins
in order to form the polymer sheets. Plasticizers used in the polymer sheets can include esters of a polybasic acid or a polyhydric alcohol, among others. Suitable plasticizers include, for example, triethylene glycol di-(2-ethylbutyrate), triethylene glycol di-(2-ethylhexanoate), triethylene glycol diheptanoate, tetraethylene glycol diheptanoate, dihexyl adipate, dioctyl adipate, hexyl cyclohexyladipate, mixtures of heptyl and nonyl adipates, diisononyl adipate, heptylnonyl adipate, dibutyl sebacate, polymeric plasticizers such as the oil-modified sebacic alkyds, and mixtures of phosphates and adipates such as disclosed in U.S. Pat. No. 3,841,890 and adipates such as disclosed in U.S. Pat. No. 4,144,217, and mixtures and combinations of the foregoing. Other plasticizers that can be used are mixed adipates made from C₄ to C₉ alkyl alcohols and cyclo C₄ to C₁₀ alcohols, as disclosed in U.S. Pat. No. 5,013,779 and C₆ to C₈ adipate esters, such as hexyl adipate. In various embodiments, the plasticizer used is dihexyl adipate and/or triethylene glycol di-2 ethylhexanoate.

In one embodiment of the present invention, polymer sheets comprise a polymer selected from the group consisting of poly(vinyl butyral), polyurethane, polyvinyl chloride, poly(ethylene-co-vinyl acetate), polyethylene, polyethylene copolymers, partially neutralized ethylene/(meth)acrylic copolymers. In another embodiment, other polymeric material with sufficient adhesion to glass and poly(cyclohexanedimethylene terephthalate-co-ethylene terephthalate) copolyester can be used.

Various embodiments include poly(ethylene-co-vinyl acetate) as describe in U.S. Patent 4,614,781, U.S. Patent 5,415,909, U.S. Patent 5,352,530, and U.S. Patent 4,935,470. Various embodiments include polyurethane comprising, for example, aliphatic isocyanate polyether based polyurethane (available from Thermedics Polymer Products of Noveon Inc.). Other additives can be incorporated into the polyurethane resins during extrusion, such as UV stabilizers and functional chemicals to provide high adhesion to glass.

Polymeric resins can be thermally processed and configured into sheet form according to methods known to those of ordinary skill in the art. As used herein, "resin" refers to the polymeric (for example poly(vinyl butyral) or poly(vinyl chloride)) component of a polymer composition. Resin will generally have other components in addition to the polymer, for example, components remaining from the polymerization process. As used herein, "melt" refers to a melted mixture of resin with a plasticizer, if required, and optionally other additives, for example, performance enhancing agents.

One exemplary method of forming a poly(vinyl butyral) sheet comprises extruding molten poly(vinyl butyral) comprising resin, plasticizer, and additives - the melt - by forcing the melt through a sheet die (for example, a die having an opening that is substantially greater in one dimension than in a perpendicular dimension). Another exemplary method of forming a poly(vinyl butyral) sheet comprises casting a melt from a die onto a roller, solidifying the resin, and subsequently removing the solidified resin as a sheet.

Methods of the present invention include coextruding polyurethane and poly(cyclohexanedimethylene terephthalate-co-ethylene terephthalate) copolyester to form a two, three, or greater layer interlayer. For example, a polyurethane melt and a poly(cyclohexanedimethylene terephthalate-co-ethylene terephthalate) copolyester melt can be coextruded to form a two layer, bilayer embodiment, or a three layer, encapsulated poly(cyclohexanedimethylene terephthalate-co-ethylene terephthalate) copolyester embodiment. For these embodiments, any of the variations given herein throughout for a poly(cyclohexanedimethylene terephthalate-co-ethylene terephthalate) copolyester polymer sheet and a non-poly(cyclohexanedimethylene terephthalate-co-ethylene terephthalate) copolyester polymer sheet can be used, where applicable. In one exemplary method of forming a PU/PETG/PU interlayer by coextrusion, where PU is polyurethane, polyurethane resin, including additives, and poly(cyclohexanedimethylene terephthalate-co-ethylene terephthalate) resin, including additives, are fed into two single-screw extruder separately. Extruder temperatures are set appropriately, for example, for polyurethane at, for example, 150°C-225°C or 160°C-180°C, and for poly(cyclohexanedimethylene terephthalate-co-ethylene terephthalate) at, for example, 200°C-290°C or 240°C-260°C. The two resins are heated to form melts, which are pumped separately into two outer-layer channels and a inner-layer channel of a three-manifold coextrusion die. The melts are then forced through a die-lip to form an interlayer having a poly(cyclohexanedimethylene terephthalate-co-ethylene terephthalate) copolyester polymer sheet disposed between two polyurethane polymer sheets. In any of these embodiments, layer thicknesses can be the same as given elsewhere herein for non-extruded embodiments.

In another exemplary method of forming poly(ethylene-co-vinyl acetate)/PETG/poly(ethylene-co-vinyl acetate) interlayers by coextrusion, EVA resin, including additives, and poly(cyclohexanedimethylene terephthalate-co-ethylene terephthalate) resin, including additives, are fed into two single-screw extruders separately, with the extruder temperature for EVA at, for example, 90°C-200°C or 90°C - 110°C, and for poly(cyclohexanedimethylene terephthalate-co-ethylene terephthalate) at, for example, 200°C-290°C or 240°C-260°C. The two melts are pumped separately into the two outer-layer channels and one inner-layer channel of a three-manifold coextrusion die, and then forced through a die-lip to form a three-layer multilayer interlayer, which can be cooled down, for example, through a water bath or a chilling-roll and then wound into a roll.

In coextrusion embodiments and extrusion coating embodiments, the outside surfaces of the multiple layer interlayers can be treated to create surface texture, or roughness, to facilitate deairing during the lamination procedure. Such surface texturing, which can be accomplished, for example, with melt fracture or embossing, is well known in the art.

As used herein, "extrusion temperature" means average melt temperature integrated across the cross section of flow.

### POLYMER FILM

As used herein, a "polymer film" means a relatively thin and rigid polymer layer that functions as a performance enhancing layer. Polymer films differ from polymer sheets, as used herein, because polymer films do not themselves provide the necessary impact resistance and glass retention properties to a multiple layer glazing structure, but rather provide performance improvements, such as infrared absorption character. Poly(ethylene terephthalate) is most commonly used as a polymer film.

Polymer films used in the present invention can be any suitable film that is sufficiently rigid to provide a relatively flat, stable surface, for example those polymer films conventionally used as a performance enhancing layer in multiple layer glass panels. The,polymer film is preferably optically transparent (i.e. objects adjacent one side of the layer can be comfortably seen by the eye of a particular observer looking through the layer from the other side), and usually has a greater, in some embodiments significantly greater, tensile modulus regardless of composition than that of the adjacent polymer sheet. In various embodiments, the polymer film comprises a thermoplastic material. Among thermoplastic materials having suitable properties are nylons, polyurethanes, acrylics, polycarbonates, polyolefins such as polypropylene, cellulose acetates and triacetates, vinyl chloride polymers and copolymers and the like. In various embodiments, the polymer film comprises materials such as re-stretched thermoplastic films having the noted properties, which include polyesters. In various embodiments, the polymer film comprises or consists of poly(ethylene terephthalate), and, in various embodiments, the poly(ethylene terephthalate) has been biaxially stretched to improve strength, and/or has been heat stabilized to provide low shrinkage characteristics when subjected to elevated temperatures (e.g. less than 2% shrinkage in both directions after 30 minutes at 150°C).

In various embodiments, the polymer film can have a thickness of 0.013 millimeters to 0.25 millimeters, 0.025 millimeters to 0.1 millimeters, or 0.04 to 0.06 millimeters. The polymer film can optionally be surface treated or coated with a functional performance layer to improve one or more properties, such as adhesion or infrared radiation reflection. These functional performance layers include, for example, a multi-layer stack for reflecting infra-red solar radiation and transmitting visible light when exposed to sunlight. This multi-layer stack is known in the art (see, for example, WO 88/01230 and U.S. Patent 4,799,745) and can comprise, for example, one or more Angstroms-thick metal layers and one or more (for example two) sequentially deposited, optically cooperating dielectric layers. As is also known (see, for example, U.S. Patents 4,017,661 and 4,786,783), the metal layer(s) may optionally be electrically resistance heated for defrosting or defogging of any associated glass layers. Various coating and surface treatment techniques for poly(ethylene terephthalate) film and other polymer films that can be used with the present invention are disclosed in published European Application No. 0157030. Polymer films of the present invention can also include a hardcoat and/or and antifog layer, as are known in the art.

In various embodiments of the present invention, poly(cyclohexanedimethylene terephthalate-co-ethylene terephthalate) copolyester polymer sheet and/or polymer film layers such as poly(ethylene terephthalate) can be directly printed with dyes, inks, pigments, and the like to impart a pattern or other optical effect upon the finished product.

The present invention includes multiple layer glass panels comprising any interlayers of the present invention.

The present invention includes methods of making interlayers and multiple layer glass panels comprising forming any of the interlayers and glass panels of the present invention by the methods described herein.

The present invention includes multiple layer glazing panels, and specifically multiple layer glass panels such as architectural safety glass and automobile windshields, comprising any of the interlayers of the present invention.

The present invention includes methods of manufacturing a multiple layer glass panel, comprising disposing any of the interlayers of the present invention, with or without additional polymeric layers, between two panes of glass and laminating the stack.

The present invention includes methods of securing an enclosed space, comprising disposing in one or more openings that provide access to said space a multiple layer glass panel of the present invention.

Also included in the present invention are stacks or rolls of any of the polymer interlayers of the present invention disclosed herein.

In addition to the embodiments given above, other embodiments comprise a rigid glazing substrate other than glass. In these embodiments, the rigid substrate can comprise acrylic such as Plexiglass^{®}, polycarbonate such as Lexan^{®}, and other plastics, that are conventionally used as glazings.

Various polymer sheet and/or laminated glass characteristics and measuring techniques will now be described for use with the present invention.

The clarity of a polymer sheet, can be determined by measuring the haze value, which is a quantification of the scattered light by a sample in contrast to the incident light. The percent haze can be measured according to the following technique. An apparatus for measuring the amount of haze, a Hazemeter, Model D25, which is available from Hunter Associates (Reston, VA), can be used in accordance with ASTM D1003-61 (Re-approved 1977)-Procedure A, using Illuminant C, at an observer angle of 2 degrees. In various embodiments of the present invention, percent haze is less than 5%, less than 3%, and less than 1%.

Pummel adhesion can be measured according to the following technique, and where "pummel" is referred to herein to quantify adhesion of a polymer sheet to glass, the following technique is used to determine pummel. Two-ply glass laminate samples are prepared with standard autoclave lamination conditions. The laminates are cooled to about -17.8°C (0°F) and manually pummeled with a hammer to break the glass. All broken glass that is not adhered to the polymer sheet is then removed, and the amount of glass left adhered to the polymer sheet is visually compared with a set of standards. The standards correspond to a scale in which varying degrees of glass remain adhered to the poly(vinyl butyral) sheet. In particular, at a pummel standard of zero, no glass is left adhered to the polymer sheet. At a pummel standard of 10, 100% of the glass remains adhered to the polymer sheet. For laminated glass panels of the present invention, various embodiments have a pummel of at least 3, at least 5, at least 8, at least 9, or 10. Other embodiments have a pummel between 8 and 10, inclusive.

The "yellowness index" of a polymer sheet can be measured according to the following: transparent molded disks of polymer sheet 1 cm thick, having smooth polymeric surfaces which are essentially plane and parallel, are formed. The index is measured according to ASTM method D 1925, "Standard Test Method for Yellowness Index of Plastics" from spectrophotometric light transmittance in the visible spectrum. Values are corrected to 1 cm thickness using measured specimen thickness. In various embodiments of the present invention, a polymer sheet can have a yellowness index of 12 or less, 10 or less, or 8 or less.

### Example 1

A 0.76 millimeter layer of poly(cyclohexanedimethylene terephthalate-co-ethylene terephthalate) is disposed between two sheets of 0.38 millimeter thick poly(ethylene-co-vinyl acetate) (available from Bridgestone Corporation, Tokyo, Japan as EVASAFE™) to form an interlayer, which is disposed between two sheets of 2 millimeter thick glass. The resulting multiple layer glass panel has a haze value of 0.7%, pummel of 9, and no breakthrough when a 2.27 kilogram steel ball is dropped from a height of 10.7 meters at any of the following temperatures: -17.8°C, 21.1 °C, and 48.9°C.

### Example 2 (Comparative to Example 1)

A 0.18 millimeter layer of biaxially stretched poly(ethylene terephthalate) is disposed between two sheets of 0.89 millimeter thick poly(vinyl butyral) containing 30 phr triethylene glycol di-(2-ethylhexanoate) to form an interlayer, which is disposed between two sheets of 2 millimeter thick glass. The resulting multiple layer glass panel has a haze value of 0.8%, pummel of 9, and a mean break height of 2.9 meters with a 2.27 kilogram steel ball at -17.8°C and no breakthrough with that same ball at 10.7 meters at any of the following temperatures: 21.1 °C, and 48.9°C.

### Example 3

A 0.5 millimeter layer of poly(cyclohexanedimethylene terephthalate-co-ethylene terephthalate) is disposed between two sheets of 0.25 millimeter thick polyurethane (available from Argotec, Inc. Greenfield, MA as Argotec PE-399) to form an interlayer, which is disposed between two sheets of 2 millimeter thick glass. The resulting multiple layer glass panel has a haze value of 0.7%, pummel of 9, and a mean break height of 10.7 meters with a 2.27 kilogram steel ball at 21.1 °C.

### Example 4 (Comparative to Example 3)

Four sheets of 0.25 millimeter thick polyurethane (available from Argotec, Inc. Greenfield, MA as Argotec PE-399) are assembled together to form a 1 millimeter polyurethane interlayer, which is disposed between two sheets of 2 millimeter thick glass. The resulting multiple layer glass panel has a haze value of 0.7%, pummel of 9, and a mean break height of 7 meters with a 2.27 kilogram steel ball at 21.1°C.

By virtue of the present invention, it is now possible to provide interlayers comprising poly(cyclohexanedimethylene terephthalate-co-ethylene terephthalate), which allows the formation of relatively stronger layers having superior clarity and favorable processing characteristics. Poly(cyclohexanedimethylene terephthalate-co-ethylene terephthalate) copolyester interlayers of the present invention can be readily shaped, which is particularly advantageous for applications such as automobile windshields, which can have significant curvature in three dimensions.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

It will further be understood that any of the ranges, values, or characteristics given for any single component of the present invention can be used interchangeably with any ranges; values, or characteristics given for any of the other components of the invention, where compatible, to form an embodiment having defined values for each of the components, as given herein throughout. For example, a polymer sheet can be formed comprising poly(cyclohexanedimethylene terephthalate-co-ethylene terephthalate) in any of the ranges given in addition to any of the ranges given for an adhesion promoter, to form many permutations that are within the scope of the present invention.

Figures are understood to not be drawn to scale unless indicated otherwise.

## Claims

1. A laminated glass interlayer, comprising:
a first polymer sheet comprising poly(cyclohexanedimethylene terephthalate-co-ethylene terephthalate) copolyester, wherein said first polymer sheet has a thickness of at least 0.25 millimeters, wherein said interlayer further comprises a second polymer sheet disposed in contact with said first polymer sheet and a third polymer sheet disposed in contact with said first polymer sheet, wherein said second polymer sheet and said third polymer sheet each comprise a polymer selected from the group consisting of poly(vinyl butyral), poly(ethylene-co-vinyl acetate), poly(ethylene-co-ethyl acrylate), polyurethane, partially neutralized ethylene/(meth)acrylic acid copolymers, polyethylene, polyethylene copolymers, and poly(vinyl chloride).

2. The interlayer of claim 1, wherein said first polymer sheet comprises poly(cyclohexanedimethylene terephthalate-co-ethylene terephthalate) copolyester having at least 10% poly(ethylene terephthalate) component by weight.

3. The interlayer of claim 1, wherein said second polymer sheet comprises polyurethane or poly(ethylene-co-vinyl acetate).

4. The interlayer of claim 1, wherein said interlayer has a thickness of at least 0.26 millimeter.

5. The interlayer of claim 1, wherein said third polymer sheet comprises polyurethane, or poly(ethylene-co-vinyl acetate).

6. The interlayer of claim 1, wherein said interlayer has a thickness of at least 0.27, millimeter.

7. The interlayer of claim 1, wherein said first polymer sheet comprises poly(cyclohexanedimethylene terephthalate-co-ethylene terephthalate) copolyester having at least 40% (polyethylene terephthalate) component by weight.

8. A laminated glass interlayer, consisting essentially of a polymer sheet comprising poly(cyclohexanedimethylene terephthalate-co-ethylene terephthalate) copolyester wherein said polymer sheet comprises adhesion promoters.

9. The interlayer of claim 8, wherein said polymer sheet has a thickness of at least 0.25 millimeter.

10. The interlayer of claim 8, wherein said polymer sheet has a thickness of at least 0.3 millimeter.

11. The interlayer of claim 8, wherein said adhesion promoter is a member selected from the group consisting of γ-glycidoxypropyltrimethoxysilane, γ-aminopropyltriethoxysilane, β-cyclohexylethyltrimethoxysilane, N-β-aminoethylaminomethylphenylethyltrimethoxysilane, N-β-aminoethyl-γ-aminopropyltrimethoxysilane, bis(β-hydroxyethyl)-γ-aminopropyltriethoxysilane, acrylic adhesives, cyanoacrylates cement, polyurethanes adhesives, and polyester adhesives.

12. A multiple layer glass panel, comprising an interlayer consisting of a polymer sheet comprising poly(cyclohexanedimethylene terephthalate-co-ethylene terephthalate) copolyester.

13. The panel of claim 12, wherein said polymer sheet further comprises adhesion promoters.

14. The panel of claim 13, wherein said polymer sheet comprises poly(cyclohexanedimethylene terephthalate-co-ethylene terephthalate) copolyester comprising at least 10% by weight of poly(ethylene terephthalate) component by weight.

15. The panel of claim 12, wherein said interlayer has a thickness of at least 0.2 millimeter.

16. The panel of claim 12, wherein said panel comprises one pane of glass.

17. The panel of claim 12, wherein said panel comprises two panes of glass.

18. A multiple layer glass panel, comprising an interlayer comprising:
a first polymer sheet comprising poly(cyclohexanedimethylene terephthalate-co-ethylene terephthalate) copolyester, wherein said first polymer sheet has a thickness of at least 0.25 millimeter.

## Patentansprüche

1. Laminierte Glaszwischenschicht, umfassend:
eine erste Polymerfolie, die Poly(cyclohexandimethylenterephthalat-co-ethylenterephthalat)-Copolyester umfasst, wobei die erste Polymerfolie eine Dicke von wenigstens 0,25 Millimeter hat, wobei die Zwischenschicht außerdem eine zweite Polymerfolie, die in Kontakt mit der ersten Polymerfolie angeordnet ist, und eine dritte Polymerfolie, die in Kontakt mit der ersten Polymerfolie angeordnet ist, umfasst, wobei die zweite Polymerfolie und die dritte Polymerfolie jeweils ein Polymer, ausgewählt aus der Gruppe, bestehend aus Poly(vinylbutyral), Poly(ethylen-co-vinylacetat), Poly(ethylen-co-ethylacrylat), Polyurethan, partiell neutralisierten Ethylen/(Meth)acrylsäure-Copolymeren, Polyethylen, Polyethylencopolymeren und Poly(vinylchlorid), umfassen.

2. Zwischenschicht gemäß Anspruch 1, wobei die erste Polymerfolie Poly(cyclohexandimethylenterephthalat-co-ethylenterephthalat)-Copolyester mit wenigstens 10 Gew.-% Poly(ethylenterephthalat)-Komponente umfasst.

3. Zwischenschicht gemäß Anspruch 1, wobei die zweite Polymerfolie Polyurethan oder Poly(ethylen-co-vinylacetat) umfasst.

4. Zwischenschicht gemäß Anspruch 1, wobei die Zwischenschicht eine Dicke von wenigstens 0,26 Millimeter hat.

5. Zwischenschicht gemäß Anspruch 1, wobei die dritte Polymerfolie Polyurethan oder Poly(ethylen-co-vinylacetat) umfasst.

6. Zwischenschicht gemäß Anspruch 1, wobei die Zwischenschicht eine Dicke von wenigstens 0,27 Millimeter hat.

7. Zwischenschicht gemäß Anspruch 1, wobei die erste Polymerfolie Poly(cyclohexandimethylenterephthalat-co-ethylenterephthalat)-Copolyester, der wenigstens 40 Gew.-% (Polyethylenterephthalat)-Komponente hat, umfasst.

8. Laminierte Glaszwischenschicht, die im Wesentlichen aus einer Polymerfolie besteht, die Poly(cyclohexandimethylenterephthalat-co-ethylenterephthalat)-Copolyester umfasst, wobei die Polymerfolie Adhäsionspromotoren umfasst.

9. Zwischenschicht gemäß Anspruch 8, wobei die Polymerfolie eine Dicke von wenigstens 0,25 Millimeter hat.

10. Zwischenschicht gemäß Anspruch 8, wobei die Polymerfolie eine Dicke von wenigstens 0,3 Millimeter hat.

11. Zwischenschicht gemäß Anspruch 8, wobei der Adhäsionspromotor ein Glied, ausgewählt aus der Gruppe, bestehend aus γ-Glycidoxypropyltrimethoxysilan, γ-Aminopropyltriethoxysilan, β-Cyclohexylethyltrimethoxysilan, N-β-Aminoethylaminomethylphenylethyltrimethoxysilan, N-β-Aminoethyl-γ-aminopropyltrimethoxysilan, Bis(β-hydroxyethyl)-γ-aminopropyltriethoxysilan, Acrylklebstoffen, Cyanoacrylatzement, Polyurethanklebstoffen und Polyesterklebstoffen, ist.

12. Mehrschichten-Glasplatte, die eine Zwischenschicht umfasst, die aus einer Polymerfolie besteht, welche Poly(cyclohexandimethylenterephthalat-co-ethylenterephthalat)-Copolyester umfasst.

13. Platte gemäß Anspruch 12, wobei die Polymerfolie außerdem Adhäsionspromotoren umfasst.

14. Platte gemäß Anspruch 13, wobei die Polymerfolie Poly(cyclohexandimethylenterephthalat-co-ethylenterephthalat)-Copolyester, der wenigstens 10 Gew.-% Poly(ethylenterephthalat)-Komponente umfasst, umfasst.

15. Platte gemäß Anspruch 12, wobei die Zwischenschicht eine Dicke von wenigstens 0,2 Millimeter hat.

16. Platte gemäß Anspruch 12, wobei die Platte wenigstens eine Glasscheibe umfasst.

17. Platte gemäß Anspruch 12, wobei die Platte zwei Glasscheiben umfasst.

18. Mehrschichten-Glasplatte, umfassend eine Zwischenschicht, die umfasst:
eine erste Polymerfolie, die Poly(cyclohexandimethylenterephthalat-co-ethylenterephthalat)-Copolyester umfasst, wobei die erste Polymerfolie eine Dicke von wenigstens 0,25 Millimeter hat.

## Revendications

1. Couche intermédiaire de verre feuilleté, comprenant :
une première feuille polymère comprenant un copolyester de poly(cyclohexanediméthylène téréphatalate-co-éthylène téréphtalate), dans laquelle ladite première feuille polymère présente une épaisseur d'au moins 0,25 millimètre, dans laquelle ladite couche intermédiaire comprend de plus une seconde feuille polymère disposée en contact avec ladite première feuille polymère et une troisième feuille polymère disposée en contact avec ladite première feuille polymère, dans laquelle ladite seconde feuille polymère et ladite troisième feuille polymère comprennent chacune un polymère choisi dans le groupe constitué de poly(vinylbutyral), poly(éthylène-co-acétate de vinyle), poly(éthylène-co-acrylate d'éthyle), polyuréthane, copolymères d'éthylène/acide (méth)acrylique partiellement neutralisés, polyéthylène, copolymères de polyéthylène, et poly(chlorure de vinyle).

2. Couche intermédiaire selon la revendication 1, dans laquelle ladite première feuille polymère comprend un copolyester de poly(cyclohexanediméthylène téréphtalate-co-éthylène téréphtalate) présentant au moins 10 % en masse de constituant poly(éthylène téréphtalate).

3. Couche intermédiaire selon la revendication 1, dans laquelle ladite seconde feuille polymère comprend du polyuréthane ou du poly(éthylène-co-acétate de vinyle).

4. Couche intermédiaire selon la revendication 1, dans laquelle ladite couche intermédiaire présente une épaisseur d'au moins 0,26 millimètre.

5. Couche intermédiaire selon la revendication 1, dans laquelle ladite troisième feuille polymère comprend du polyuréthane, ou du poly(éthylène-co-acétate de vinyle).

6. Couche intermédiaire selon la revendication 1, dans laquelle ladite couche intermédiaire présente une épaisseur d'au moins 0,27 millimètre.

7. Couche intermédiaire selon la revendication 1, dans laquelle ladite première feuille polymère comprend un copolyester de poly(cyclohexanediméthylène téréphtalate-co-éthylène téréphtalate) présentant au moins 40 % en masse de constituant poly(éthylène téréphtalate).

8. Couche intermédiaire de verre feuilleté, essentiellement constituée d'une feuille polymère comprenant un copolyester de poly(cyclohexanediméthylène téréphtalate-co-éthylène téréphtalate), dans laquelle ladite feuille polymère comprend des promoteurs d'adhérence.

9. Couche intermédiaire selon la revendication 8, dans laquelle ladite feuille polymère présente une épaisseur d'au moins 0,25 millimètre.

10. Couche intermédiaire selon la revendication 8, dans laquelle ladite feuille polymère présente une épaisseur d'au moins 0,3 millimètre.

11. Couche intermédiaire selon la revendication 8, dans laquelle ledit promoteur d'adhérence est un élément choisi dans le groupe constitué de γ-glycidoxypropyltriméthoxysilane, γ-aminopropyltriéthoxysilane, β-cyclohexyléthyltriméthoxysilane, N-β-aminoéthylaminométhyl-phényléthyltriméthoxysilane, N-β-aminoéthyl-γ-aminopropyltriméthoxysilane, bis(β-hydroxyéthyl)-γ-aminopropyltriéthoxysilane, des adhésifs acryliques, un ciment-colle de cyanoacrylates, des adhésifs de polyuréthane et des adhésifs de polyester.

12. Panneau en verre à couches multiples, comprenant une couche intermédiaire consistant en une feuille polymère comprenant un copolyester de poly(cyclohexanediméthylène téréphtalate-co-éthylène téréphtalate).

13. Panneau selon la revendication 12, dans lequel ladite feuille polymère comprend de plus des promoteurs d'adhérence.

14. Panneau selon la revendication 13, dans lequel ladite feuille polymère comprend un copolyester de poly(cyclohexanediméthylène téréphtalate-co-éthylène téréphtalate) comprenant au moins 10 % en masse de constituant poly(éthylène téréphtalate).

15. Panneau selon la revendication 12, dans lequel ladite couche intermédiaire présente une épaisseur d'au moins 0,2 millimètre.

16. Panneau selon la revendication 12, dans lequel ledit panneau comprend une vitre de verre.

17. Panneau selon la revendication 12, dans lequel ledit panneau comprend deux vitres de verre.

18. Panneau de verre à couches multiples, comprenant une couche intermédiaire comprenant :
une première feuille polymère comprenant un copolyester de poly(cyclohexanediméthylène téréphtalate-co-éthylène téréphtalate), dans lequel ladite première feuille polymère présente une épaisseur d'au moins 0,25 millimètre.
